# EUROPEAN PATENT APPLICATION

(11) **EP 2 395 471 A2**
(43) Date of publication of application: **14.12.2011**
(21) Application number: 09839760.7
(22) Date of filing: 18.12.2009
(51) Int. Cl.: G06Q 50/00, G06F 21/00, G06K 17/00

(54) **SYSTEM AND METHOD FOR CONTROLLING SECURITY DOCUMENTS**

(30) Priority: 05.02.2009 KR 20090009286
(71) Applicant: Lee, Young Bum, Gyeonggi-do 420-030 (KR)
(72) Inventor: Lee, Young Bum, Gyeonggi-do 420-030 (KR)
(74) Representative: Zech, Stefan Markus
(86) International application number: PCT/KR2009/007582
(87) International publication number: WO 2010/090393

(57) **Abstract**

A security document control system and a control method thereof are disclosed. The system functions to automatically control a series of security operations including sensing security documents, storing all records with respect to check-out of security documents in a database, closing exit gates if illegal removal of security documents is judged, and informing a control center and security guards of the illegal removal of security documents so as to arrest an employee who attempts to illegally remove security documents.

## Description

### BACKGROUND OF THE INVENTION

### Field of the Invention

The present invention relates to a security document control system and a control method thereof, and more particularly, to a control system and method of automatically controlling a series of security procedures including sensing security documents, storing all records with respect to check-out of security documents in a database, closing exit gates if illegal removal of security documents is judged, and informing a control center and security guards of the illegal removal of security documents so as to arrest an employee who attempts to illegally remove security documents.

### Description of the Related Art

Documents containing internal information of an enterprise as assets of the enterprise are very important. As is broadly well known, it is of frequent occurrence that documents containing internal information of an enterprise are removed by a corrupt employee, striking a blow to the enterprise and causing social problems.

Examples of media containing such internal information of an enterprise include a variety of digital documents and general paper documents including printed matter of the digital documents. Since the importance of these media depends on content of the media, paper documents are of equal importance to other media in terms of data contained therein. Nevertheless, various solutions, which have been developed heretofore to maintain secrecy of business information, are mainly too much centered on digitized content and it is no exaggeration to say that the security of printed matter, drawings, paper documents, books and the like has yet to be properly addressed.

As security systems currently applicable to general paper documents and the like, there are present only fragmentary systems, which are mainly used in, e.g., stationary shops and libraries and are designed to beep out a warning when removal of objects equipped with electronic sensors is attempted, so as to prevent removal of the objects from designated locations. In the case of the above described systems mainly used in stationary shops and libraries, due to a limit in concealment of the electronic sensors, applications thereof are limited to some particular objects, such as packaged or bound articles, more particularly, books and CDs. Therefore, applying these systems to enterprises which have a security demand for even general printed matter is somewhat unreasonable. Moreover, the above described fragmentary systems have difficulty effectively managing a document check-out environment of an enterprise in which a great quantity of documents should often be checked out. To arrest a person who attempts to illegally remove security documents, furthermore, a security guard must always be stationed near a document sensing apparatus, which disadvantageously increases labor costs and management difficulties.

### SUMMARY OF THE INVENTION

Therefore, the present invention has been made in view of the above problems, and it is an object of the present invention to provide a security document control system and a control method thereof, which realize automated management of a series of procedures from a security document check-out request to a security document check-out, automated regulation of a document check-out and a multi-step safeguard against illegal removal of security documents, thereby providing more effective management of security documents of enterprises.

In accordance with one aspect of the present invention, the above and other objects can be accomplished by the provision of a security document control system, including a security document having a security tag to be sensed by a document sensing device, the document sensing device installed in a document storage room to sense the security document before the security document is checked out and which is connected to a system control device via a cable to transmit a sensed signal of the tag of the security document to the system control device, an image capture device installed in the document storage room to capture an image of an employee checking out the security document and which is connected to the system control device via a cable and serves to digitize the captured image of the employee and transmit the resultant digital image to the system control device, an employee recognition device installed in the document storage room to recognize the employee before the employee exits the document storage room and which is connected to the system control device via a cable and serves to transmit an Identification (ID) of the employee to the system control device, an entrance/exit regulation device installed at an entrance/exit of the document storage room to regulate entrance/exit of persons and which is connected to the system control device via a cable and serves to close a gate upon receiving a gate closure command from the system control device, a check-out request database installed in the system control device or taking the form of a remote server connected to the system control device via a network and which serves to store information related to a prior request to check out a particular security document, a check-out record database installed in the system control device or taking the form of a remote server connected to the system control device via a network and which serves to store content of check-out requests of security documents in order of check-out date, a control center warning device connected to the system control device via a remote network and which serves to inform a person in charge of a control center of information about the employee attempting to illegally remove the security document transmitted from the system control device, a security guard warning device connected to the system control device via a remote network and which serves to inform a security guard at a final exit of information about the employee attempting to illegally remove the security document transmitted from the system control device so as to arrest the employee, and the system control device installed in the document storage room or the control center and which performs a series of procedures including data exchange with the check-out request database and the check-out record database, reception or sending of signals from or to the document sensing device, the image capture device and the entrance/exit regulation device, and transmitting an audio alarm and information related to the illegal removal of the security document to the control center warning device and the security guard warning device.

The security document may be provided with an Electro-Magnetic (EM) type security label.

The EM type security label may be a non-extinctive label.

The document sensing device may have a ceiling closed configuration to ensure that a document necessarily passes through a sensing region.

The employee recognition device may be of a Radio Frequency Identification (RFID) type.

The employee recognition device may be of a fingerprint recognition type.

The employee recognition device may be of a face recognition type using a face recognition system.

The series of procedures performed by the system control device may include receiving a signal sensed by the document sensing device, transmitting an image capture command to the image capture device, storing a digital image transmitted from the image capture device and employee information transmitted from the employee recognition device in the check-out record database, judging whether or not a document check-out request is included in the check-out request database, transmitting a gate closure command to the entrance/exit regulation device, and transmitting information about illegal removal of the security document to the control center warning device and the security guard warning device.

Each of the control system warning device and the security guard warning device may include an audio warning device and a monitor device to output a digital image.

In accordance with another aspect of the present invention, there is provided a security document control method including storing content of a check-out request input via the Internet or an internal terminal in a check-out request database, sensing whether or not a document to be checked out includes a security document using a document sensing device, capturing an image of a document check-out situation using an image capture device if the document to be checked out is a security document and recognizing an employee checking out the document using an employee recognition device, thereby storing associated data in a check-out record database, confirming whether or not a prior check-out request for the security document is input into the check-out request database, closing a gate using an entrance/exit regulation device if illegal removal of the security document is judged, informing a control center warning device and a security guard warning device located at a final exit of the illegal removal of the security document to arrest the employee.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a schematic view of a system in accordance with the present invention;
FIG. 2 is a picture illustrating various sensitive labels (tags) usable with the system in accordance with the present invention;
FIG. 3 is a view illustrating installation of a part of the system in accordance with one exemplary embodiment of the present invention;
FIG. 4 is a view illustrating installation of a part of the system in accordance with another exemplary embodiment of the present invention;
FIG. 5 is a view illustrating a general sensing device, the ceiling of which is open;
FIG. 6 is a view illustrating a sensing device in accordance with the present invention, the ceiling of which is closed;
FIG. 7 is a flowchart illustrating a series of system control procedures by a system control device in accordance with the present invention; and
FIG. 8 is a flowchart illustrating the sequence of a control method in accordance with the present invention.

### DETAILED DESCRIPTION OF THE INVENTION

Hereinafter, an exemplary embodiment in accordance with the present invention will be described in detail with reference to the accompanying drawings.

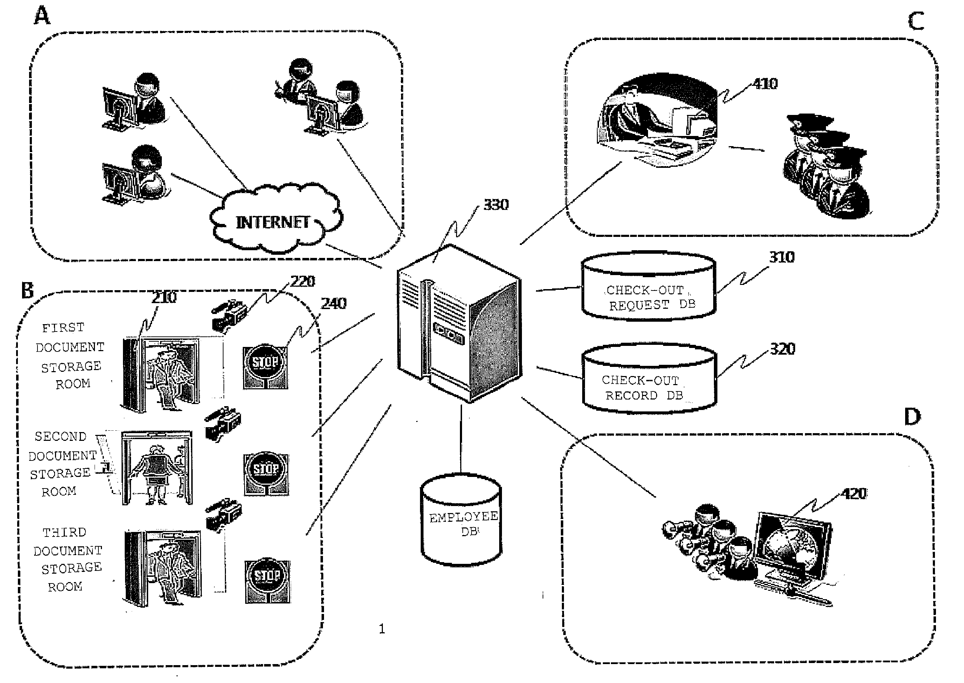

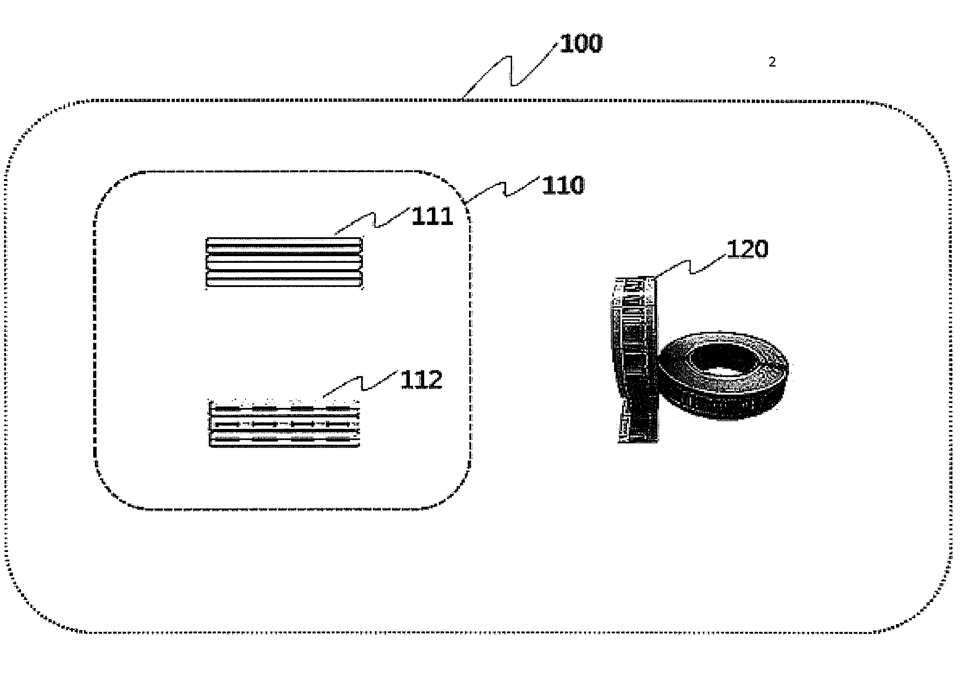

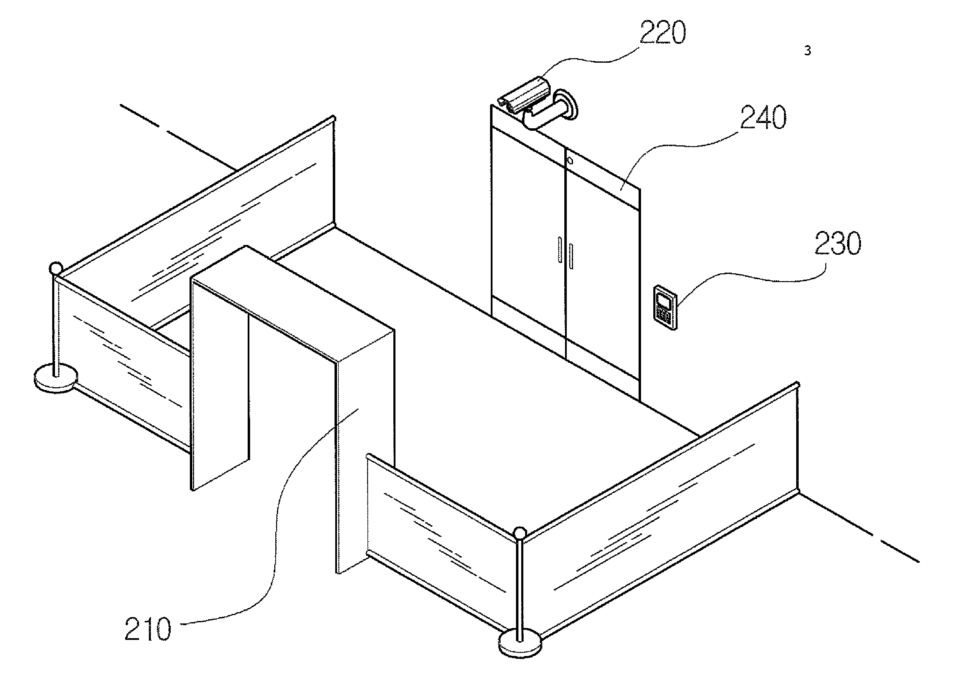

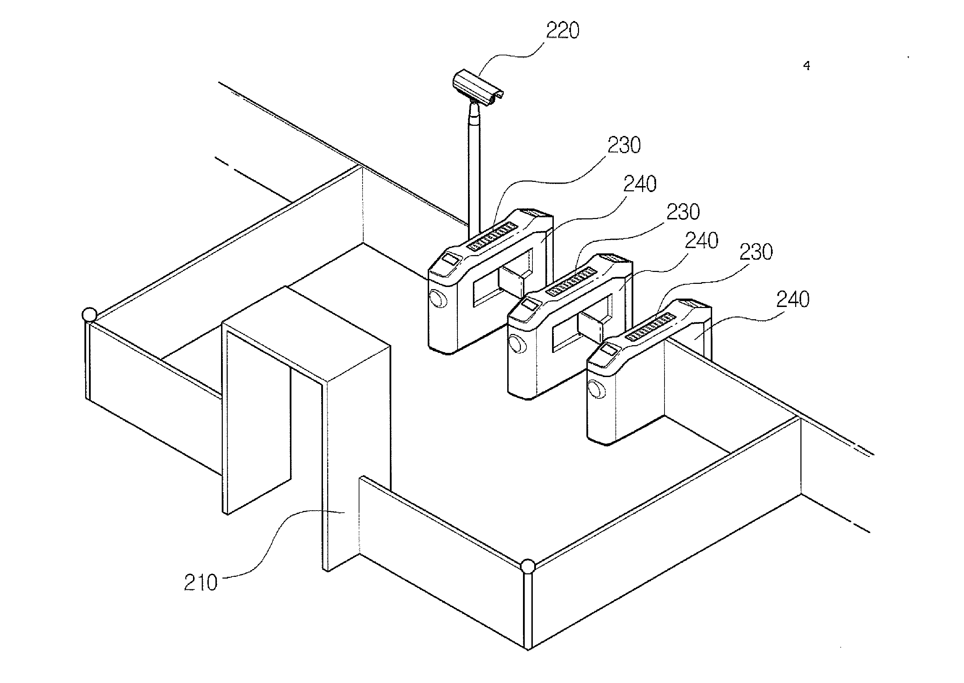

FIG. 1 is a schematic view of a security document control system in accordance with the present invention. The security document control system in accordance with the present invention is installed to, e.g., a document storage room of a company and serves to collect data related to check-out of security documents and to regulate a person who attempts to illegally remove security documents. Here, the security documents are equipped with sensitive labels 100 in the form of tags (see FIG. 2). As illustrated in FIG. 1, the security document control system includes a document sensing device 210, an image capture device 220, an employee recognition device (230, see FIGS. 3 and 4), an entrance/exit regulation device 240, a check-out request database 310 and a check-out record database 320 for data storage and system control, a system control device 330, and a control center warning device 410 and a security guard warning device 420 to prevent illegal removal of security documents.

In the following description, the term 'document storage room' may correspond to any space from among business spaces, office spaces and the like where security documents may be present and stored.

The security document control system in accordance with the present invention is realized on the assumption that security documents are equipped with magnetic sensitive tags, which can be sensed by a magnetic sensing device, i.e., the document sensing device 210. From among a variety of magnetic sensitive tags, the security document control system in accordance with the present invention preferably employs sensitive tags having a label format, in consideration of the fact that the sensitive tags must be attached to general paper documents and be concealed from view in terms of security. FIG. 2 illustrates a picture of a product which is useful as the sensitive label 100. The sensitive label 100 may be broadly divided into an Electro-Magnetic (EM) type sensitive label 110 and a Radio-Frequency (RF) type sensitive label 120. The EM type sensitive label 110 is advantageously concealed from view although it has relatively low sensitivity. On the other hand, the RF type sensitive label 120 is advantageous in terms of sensitivity, but cannot be concealed because of a size and thickness thereof. Thus, the sensitive labels 110 and 120 may be selected to suit use purposes in consideration of particular advantages thereof.

In the control system in accordance with the present invention, paper documents widely used in office work, such as printed matter and design drawings, are security objects and therefore, it is advantageous to use sensitive labels that can be effectively concealed from view. From this point of view, the EM type sensitive label 110 is more preferable. Current technology has succeeded in making sensors capable of sensing a magnetic line having a width of 1mm and a length of 3.5cm. Thus, by attaching the EM type sensitive label 110 with the aforementioned size of the magnetic line to a more or less invisible position of a rear surface or an upper/lower end of one or more documents selected from among a document file, high concealment effects may be realized. That is, the above described sensitive label is very effective to realize security documents. In particular, the EM type sensitive label 110 may be sub-divided into a non-extinctive sensitive label 111 and an extinctive sensitive label 112. The extinctive sensitive label 112 is designed to expose illegal removal without generation of beep sound and thus, is mainly used in quite places, such as stationary shops. In the case of the security document control system in accordance with the present invention, it is preferable to use the non-extinctive sensitive label 111 in order to enhance security effects.

Instead of using the EM type sensitive label, furthermore, using a microscopic Radio Frequency Identification (RFID) chip or obtaining a magnetic tag with paper itself may be selectively performed based on the importance of documents.

Whether any one of documents present in the document storage room has security restrictions may be determined by document writers, persons in charge of business, or security guards based on the importance of documents and the decision making of an enterprise. Also, whether to provide each document of a document file with a magnetic label or to put away any magnetic article to be sensed in a document file may be flexibly determined to suit a situation in consideration of a sensor price, etc.

In FIG. 1, an area A illustrates a situation in which employees request to check out security documents and the system control device 330 stores content of the check-out requests into the check-out request database 310. To perform the security document check-out request, it is necessary for the employees to input an employee Identification (ID), detailed items of target security documents, a check-out purpose and the like using the Internet or an internal network by means of a terminal at a remote place or a terminal provided at a check-out request department.

An area B of FIG. 1 illustrates a functional coupling relationship between the document sensing device 210, the image capture device 220, the employee recognition device 230, the entrance/exit regulation device 240 and the system control device 330 of the security document control system in accordance with the present invention, which are installed to one or more document storage rooms of a company and serve to collect data related to document check-out situations and to regulate the document check-out situations. FIGS. 3 and 4 illustrate different exemplary embodiments in which the document sensing device 210, the image capture device 220, the employee recognition device 230 and the entrance/exit regulation device 240 are installed within the document storage room in different ways in consideration of functions thereof.

As illustrated in FIGS. 3 and 4, the document sensing device 210 is installed within the document storage room at a distance from an entrance/exit or the entrance/exit regulation device 240. More particularly, the document sensing device 210 is installed at an appropriate position to allow a camera of the image capture device 220 to capture an image of a person checking out security documents when the person passes through the document sensing device 210. The document sensing device 210 is linked to the system control device 330 via a cable to send or receive data and command signals to or from the system control device 330.

As illustrated, the document sensing device 210 is spaced apart from the entrance/exit of the document storage room by a predetermined distance such that persons wishing to check out documents must pass through the document sensing device 210 when exiting the document storage room. This assures smooth transmission of data and command signals between the above listed devices and provides the system control device 330 with a certain judgment time.

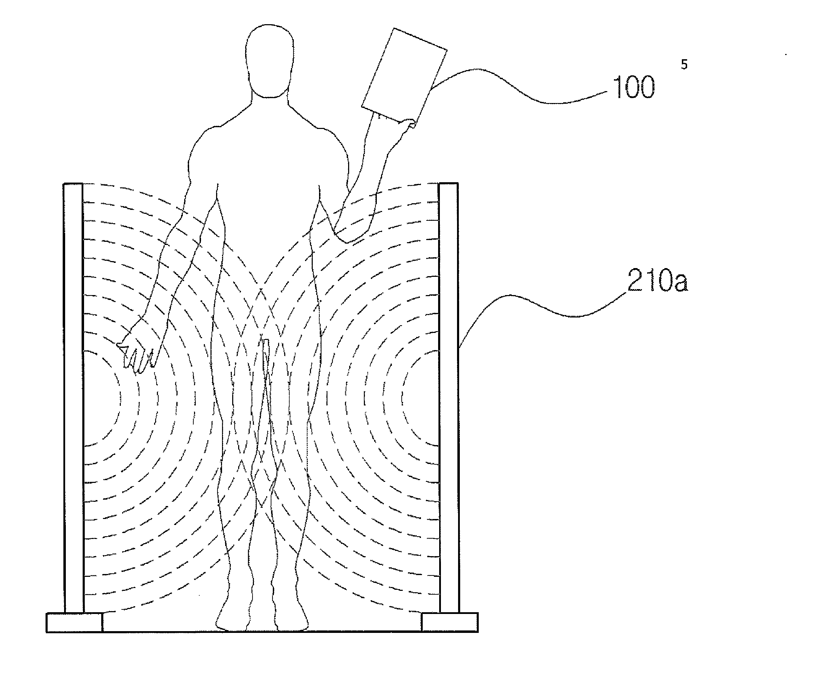

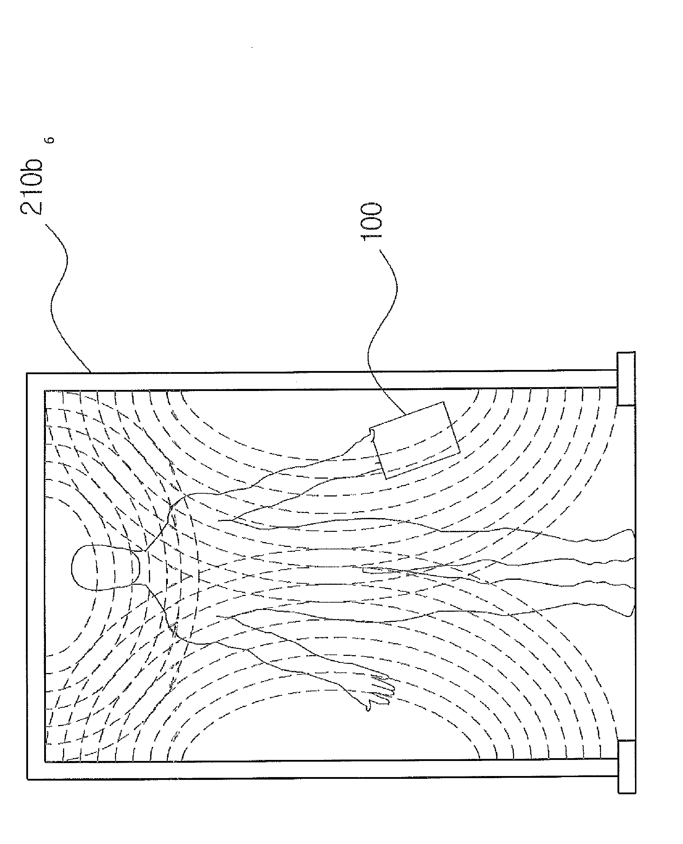

As illustrated in FIG. 5, the document sensing device 210 may be a widely used dual-stand type sensing device 210a. However, most dual-stand type sensing devices are fabricated to a height of about 160cm and may exhibit failure in sensing of tall persons. Moreover, in case where a security guard be absent in the document storage room, if a person illegally attempts to locate a security document outside of a sensing region of the sensing device 210a as illustrated, the dual-stand type sensing device 210a is ineffective to the preservation of security documents. Thus, to ensure that a security document necessarily passes a sensing region of the sensing device prior to passing the exit, as illustrated in FIG. 6, a sensing device 210b, the ceiling of which is closed, may be used.

The image capture device 220 serves to capture an image of employees checking out security documents and to digitize the captured image and transmit the resultant digital signals to the system control device 330. The image capture device 220 may be installed to a wall surface above the top of the exit, or may be installed at an appropriate height by means of a support so as to capture an image of employees passing through the document sensing device 210. The image capture device 220 is linked to the system control device 330 via a cable to send or receive data and signals to or from the system control device 330. Digitizing the captured image to store the resultant digital signals in a database may be performed by a camera prior to data transmission and as occasion demands, may be performed in a computer containing the system control device 330 after data transmission.

The employee recognition device 230 functions to confirm an ID of an employee who checks out security documents and transmit information about the employee to the system control device 330. As illustrated in FIGS. 3 and 4, the employee recognition device 230 may be fixed to any one of a gate body of the entrance/exit regulation device 240, a wall surface around the exit, a body of the document sensing device 210 and other appropriate positions. The employee recognition device 230 is connected to the system control device 330 via a cable. The employee recognition device 230 may be realized using a known face recognition method to recognize a face using image data from the image capture device 220, as well as a widely used RFID method and a fingerprint recognition method. It is clear that the employee recognition device 230 may be realized using other conventionally widely used methods than the above listed methods.

The entrance/exit regulation device 240 is a physical device to primarily prevent removal of security documents and functions to close a gate upon receiving a command from the system control device 330. The entrance/exit regulation device 240 may be installed at an upper or lower end of a doorframe so as to open or close a door as illustrated in FIG. 3, or may include a body in the form of an electronic gate so as to selectively allow entrance/exit of persons as illustrated in FIG. 4. It is clear that the entrance/exit regulation device 240 is not limited to the above described types and various other types of the entrance/exit regulation device 240 may be realized so long as the entrance/exit regulation device 240 is operated in response to a command from the system control device 330 rather than being opened when recognizing an employee.

As illustrated in the center of FIG. 1, the system control device 330 functions as a computer to control the entire system and perform a series of procedures. The system control device 330 sends or receives data to or from the check-out request database 310 and the check-out record database 320, which record and manage information about check-in/check-out of security documents. These databases 310 and 320 may be provided in a computer containing the system control device 330, or may be provided in a remote server and be linked to the system control device 330 via a network.

The check-out request database 310 stores data, such as check-out date/time, an ID of an employee who checks out security documents, detailed items of security documents, check-out purposes and the like, in relation to a prior request to check out particular documents. The check-out record database 320 stores data required to check out security documents, such as image data transmitted from the image capture device 220, in order of check-out date. Both the databases 310 and 320 may be associated with an employee database, to obtain detailed information about an employee, such as name, resident registration number, department, post, a picture of the employee and the like.

The system control device 330 is connected to the respective aforementioned devices via a cable and a network. Thus, the system control device 330 performs a series of procedures to control the system in accordance with the present invention, including controlling the document sensing device 210, the image capture device 220, the employee recognition device 230 and the entrance/exit regulation device 240, accessing the databases 310 and 320 for storage and inquiry of data, and transmitting required information to the control center warning device 410 and the security guard warning devices 420. It is clear that the system control device 330 may be installed at any place connectable via a network or a cable, as well as the document storage room or the control center.

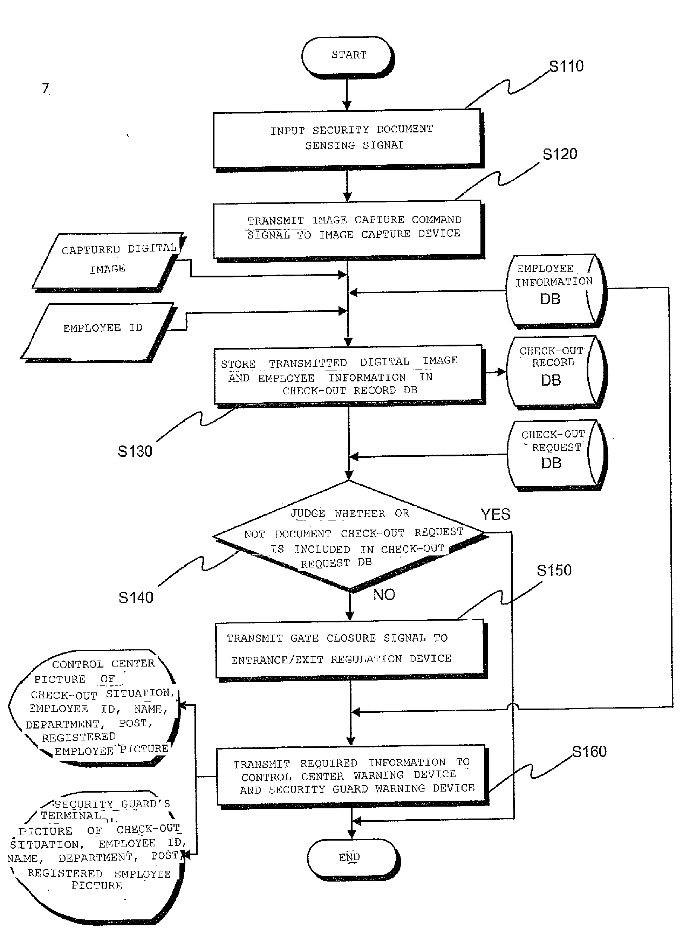

FIG. 7 illustrates a series of system control procedures by the system control device, in order to manage check-out of documents and prevent illegal removal of security documents. The series of control procedures by the system control device include receiving a signal sensed by the document sensing device (S110), transmitting an image capture command to the image capture device (S120), storing a digital image transmitted from the image capture device and employee information transmitted from the employee recognition device in the check-out record database (S130), judging whether or not a document check-out request is included in the check-out request database (S140), transmitting a gate closure command to the entrance/exit regulation device (S150), and transmitting information about illegal removal of security documents to the control center warning device and the security guard warning device. To provide more detailed information required to perform the above described procedures, the system control device may cooperate with the employee database so as to refer to detailed information about an employee.

The control center warning device 410 serves to inform the control center of the presence of an employee attempting to illegally remove security documents without a prior check-out request for the security documents. The control center may be linked to public organizations such as the police or prosecutor's office as well as security guards of a company.

The security guard warning device 420 serves to inform a security guard of the presence of an employee attempting to illegally remove security documents, so as to arrest the employee. To effectively arrest an employee who illegally posses security documents and attempts to escape from a particular region (company), it is desirable to install the security guard warning device 420 at several locations. Even if installing the security guard warning device 420 at several locations is difficult, the security guard warning device 420 must be at least installed to inform a security guard at a final exit of the illegal removal of security documents.

The control center warning device 410 and the security guard warning device 420 respectively consist of an audio warning device and a monitor device to display image information, in order to inform of information about employees by means of data transmitted from the system control device 330. To assist a security guard in effectively finding a particular employee among many employees in the building of a company, the information displayed on the monitor preferably includes, for example, an image capturing a check-out situation, name, department, post and registered employee picture.

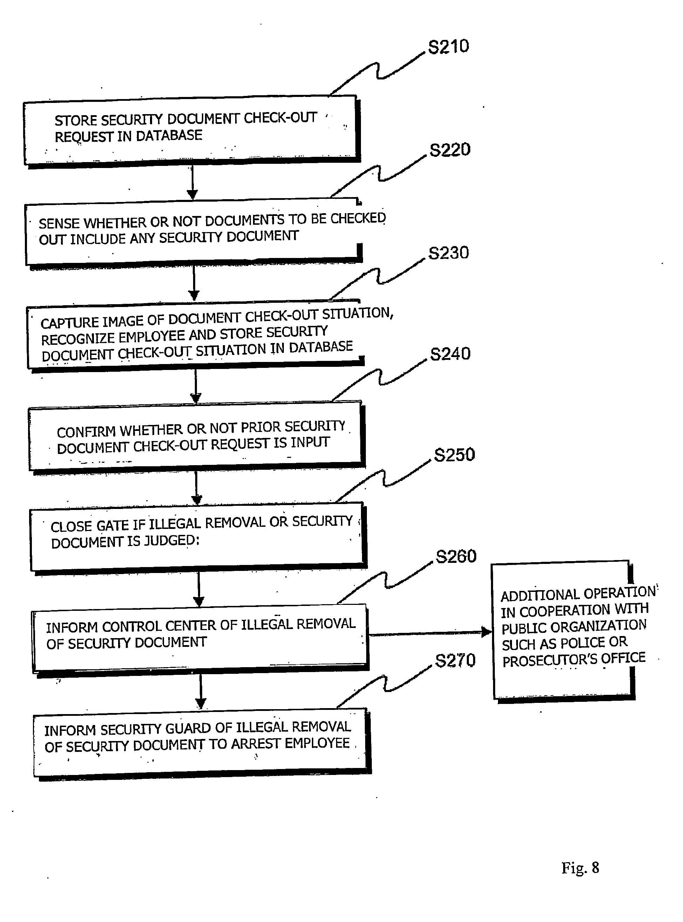

FIG. 8 illustrates the sequence of a security document control method of the security document control system in accordance with the present invention. The security document control method includes storing content of a document check-out request input via the Internet or an internal terminal in the check-out request database (S210), sensing whether or not documents to be checked include a security document using the document sensing device (S220), capturing an image of a document check-out situation using the image capture device if the document to be checked out is a security document and recognizing an employee checking out the document using the employee recognition device, thereby storing associated data in the check-out record database (S230), confirming whether or not a prior check-out request for the security document has been input into the check-out request database (S240), closing a gate using the entrance/exit regulation device if illegal removal of the security document is judged (S250); informing the control center warning device of the illegal removal of the security document (S260), and informing the security guard warning device located at the final exit of the illegal removal of the security document to arrest the employee (S270). If necessary, operation S260 of informing the control center warning device of the illegal removal of the security document may be performed simultaneously with an additional operation of informing public organizations such as the police or prosecutor's office of the illegal removal of the security document.

As is apparent from the above description, the present invention provides a security document control system and a control method thereof, which can realize automated management of a series of procedures from a security document check-out request to a security document check-out as well as automated regulation of a document check-out. With the above described characteristics, the present invention has several effects in that it is suitable for use in enterprises and public offices in which a great quantity of documents is checked in or out daily, that it is advantageous in terms of costs because it enables monitoring and regulation of check-out of security document even by a small number of management persons, that it can achieve high efficiency in preventing illegal removal of security documents owing to a multi-step safeguard, and that it is very effective to take follow-up measures owing to systematical management of all data including image data with respect to check-out records by means of databases.

Although the exemplary embodiment of the present invention has been disclosed for illustrative purposes, those skilled in the art will appreciate that various modifications, additions and substitutions are possible, without departing from the scope and spirit of the invention as disclosed in the accompanying claims.

## Claims

1. A security document control system, comprising:
a security document having a security tag to be sensed by a document sensing device;
the document sensing device installed in a document storage room to sense the security document before the security document is checked out and which is connected to a system control device via a cable to transmit a sensed signal of the tag of the security document to the system control device;
an image capture device installed in the document storage room to capture an image of an employee checking out the security document and which is connected to the system control device via a cable and serves to digitize the captured image of the employee and transmit the resultant digital image to the system control device;
an employee recognition device installed in the document storage room to recognize the employee before the employee exits the document storage room and which is connected to the system control device via a cable and serves to transmit an Identification (ID) of the employee to the system control device;
an entrance/exit regulation device installed at an entrance/exit of the document storage room to regulate entrance/exit of persons and which is connected to the system control device via a cable and serves to close a gate upon receiving a gate closure command from the system control device;
a check-out request database installed in the system control device or taking the form of a remote server connected to the system control device via a network and which serves to store information related to a prior request to check out a particular security document;
a check-out record database installed in the system control device or taking the form of a remote server connected to the system control device via a network and which serves to store content of check-out requests of security documents in order of check-out date;
a control center warning device connected to the system control device via a remote network and which serves to inform a person in charge of a control center of information about the employee attempting to illegally remove the security document transmitted from the system control device;
a security guard warning device connected to the system control device via a remote network and which serves to inform a security guard at a final exit of information about the employee attempting to illegally remove the security document transmitted from the system control device so as to arrest the employee; and
the system control device installed in the document storage room or the control center and which performs a series of procedures including data exchange with the check-out request database and the check-out record database, reception or sending of signals from or to the document sensing device, the image capture device and the entrance/exit regulation device, and transmitting an audio alarm and information related to the illegal removal of the security document to the control center warning device and the security guard warning device.

2. The system according to claim 1, wherein the security document is provided with an Electro-Magnetic (EM) type security label.

3. The system according to claim 2, wherein the EM type security label is a non-extinctive label.

4. The system according to claim 1, wherein the document sensing device has a ceiling closed configuration to ensure that a document necessarily passes through a sensing region.

5. The system according to claim 1, wherein the employee recognition device is of a Radio Frequency Identification (RFID) type.

6. The system according to claim 1, wherein the employee recognition device is of a fingerprint recognition type.

7. The system according to claim 1, wherein the employee recognition device is of a face recognition type using a face recognition system.

8. The system according to claim 1, wherein the series of procedures performed by the system control device includes:
receiving a signal sensed by the document sensing device;
transmitting an image capture command to the image capture device;
storing a digital image transmitted from the image capture device and employee information transmitted from the employee recognition device in the check-out record database;
judging whether or not a document check-out request is included in the check-out request database;
transmitting a gate closure command to the entrance/exit regulation device; and
transmitting information about illegal removal of the security document to the control center warning device and the security guard warning device.

9. The system according to claim 1, wherein each of the control center warning device and the security guard warning device includes an audio warning device and a monitor device to output a digital image.

10. A security document control method, comprising:
storing content of a check-out request input via the Internet or an internal terminal in a check-out request database;
sensing whether or not a document to be checked out includes a security document using a document sensing device;
capturing an image of a document check-out situation using an image capture device if the document to be checked out is a security document and recognizing an employee checking out the document using an employee recognition device, thereby storing associated data in a check-out record database;
confirming whether or not a prior check-out request for the security document is input into the check-out request database;
closing a gate using an entrance/exit regulation device if illegal removal of the security document is judged;
informing a control center warning device and a security guard warning device located at a final exit of the illegal removal of the security document to arrest the employee.
